Europäisches Patentamt

**European Patent Office**

**Office européen des brevets**

(11) Publication number: **0 040 966**
A1

(12) # EUROPEAN PATENT APPLICATION

(21) Application number: **81302276.1**

(51) Int. Cl.³: **A 47 J 27/60**

(22) Date of filing: **22.05.81**

(30) Priority: **23.05.80 GB 8017161**

(43) Date of publication of application: **02.12.81**
**Bulletin 81/48**

(84) Designated Contracting States: **AT BE CH DE FR LI LU NL SE**

(71) Applicant: Scott, Charles, BRIER HOUSEWARES Unit 1, Excelsior Works Mucklow Hill, Halesowen West Midlands (GB)
Applicant: Scott, Colin James, BRIER HOUSEWARES Unit 1, Excelsior Works Mucklow Hill, Halesowen West Midlands (GB)

(72) Inventor: Scott, Charles, 48 Thornhill Road, Quarrybank Brierley Hill West Midlands (GB)

(74) Representative: Harrison, Gordon Donald et al, Forrester & Boehmert Widenmayerstrasse 4/I, D-8000 München 22 (DE)

(54) **Improvements relating to saucepans and inserts therefor, and methods, involving the use of such combinations for preventing liquids from boiling over.**

(57) A combination comprising a saucepan and an insert adapted to be fitted into the saucepan to, for example, prevent milk from boiling over. The insert comprises an annular outer part (6) having a frusto-conical lip (L) by which the insert may be entered into gripping engagement with the interior of the saucepan, just below the lip. The accessory also comprises an inner part (14) connected to the outer part by webs (12), a central well (16) being provided in the inner part, the base (18) of the well being apertured (19).

EP 0 040 966 A1

Title: "Improvements relating to Saucepans and inserts therefor, and methods, involving the use of such combinations for preventing liquids from boiling over"

This invention is concerned with improvements relating to saucepans, and in particular to accessories for saucepans which assist in the use of the saucepan in cooking or heating. It is to be appreciated that the term "saucepan" is used herein generally as including other forms of cooking utensil, such as pots.

A problem is encountered in the boiling of certain liquids (such as milk) which tends to boil over. Many previous suggestions have been made to prevent (for example) milk from boiling over, but all previous suggestions have encountered other difficulties. For example, suggestions have been made to place items within or over a saucepan to be used for boiling milk, which prevents the milk from boiling over, but it has been necessary to remove such items from the saucepan before pouring the milk therefrom, to prevent the item from falling from the saucepan as the milk is being poured.

According to this invention there is provided, in combination, a saucepan and an insert therefor which is adapted to be fitted into the interior of the saucepan, the insert comprising an outer circumferential portion adapted to be grippingly engaged with an internal circumferential region of the saucepan beneath the rim thereof, and an inner portion which affords a central well extending downwardly from the outer portion, said outer portion having one or more openings arranged so that in use, boiling liquid in the saucepan may flow upwardly through the openings and downwardly into the well and through one or more apertures in the well into the lower part of the saucepan, and so that liquid may be poured from the saucepan through the openings.

By virtue of the gripping engagement between the circumferentially outer portion and the interior of the saucepan, when the saucepan is tipped up to pour liquid therefrom, the insert will remain in position relative to the saucepan, and the liquid may be poured therefrom, passing through the openings. This facility is of considerable advantage to disabled people.

Advantageously the ratio of the volume enclosed by the well to the volume of the saucepan beneath the level of the circumferential region thereof engaged by the insert (that is, including the volume of the well itself) is greater than 10%, preferably greater than 15%.

Preferably the well comprises a generally flat base, and the ratio of the area of the base to the cross-sectional area of the saucepan, particularly at the same height thereof as the base, is greater than 10%, preferably being greater than 15%.

Preferably the outer portion of the insert is generally in the form of a flat annulus, and the ratio of the area of the openings through which liquid in the saucepan may flow, to the area of the outer portion as a whole is greater than 20%, preferably being greater than 25%.

Preferably the outer portion of the insert comprises two or more generally arcuate openings, webs between which interconnecting the outer and inner portions.

Preferably there are two or more such openings in the outer portion, which are preferably arcuate, and which may be afforded by slots in the outer portion, or which may be defined by recesses in the outer portion, together with the inner portion.

Conveniently the insert comprises a tapered lip which may be press-fitted into the saucepan by engagement with said internal circumferential region of the saucepan.

As an additional utility, the insert may be fitted into a saucepan, which may be partially filled with water. When it is desired to heat an item (such as a bottle of baby food) the item may be placed in the well, to be heated by the upward passage of hot water into the well through the apertures in the base, and/or by the continuous circulation of hot water in a downward direction through the well.

Further, a poaching cup may be inserted into the well, to allow an egg to be poached.

This invention also provides a method of boiling a liquid, involving the use of a combination of the kind described in the preceding paragraphs to prevent the liquid from boiling over.

There will now be given a detailed description, to be read with reference to the accompanying drawing, of a saucepan and an accessory therefor, both the accessory and the combination of accessory and saucepan being illustrative of the invention and having been selected for the purposes of illustrating the invention by way of example. In the accompanying drawings:-

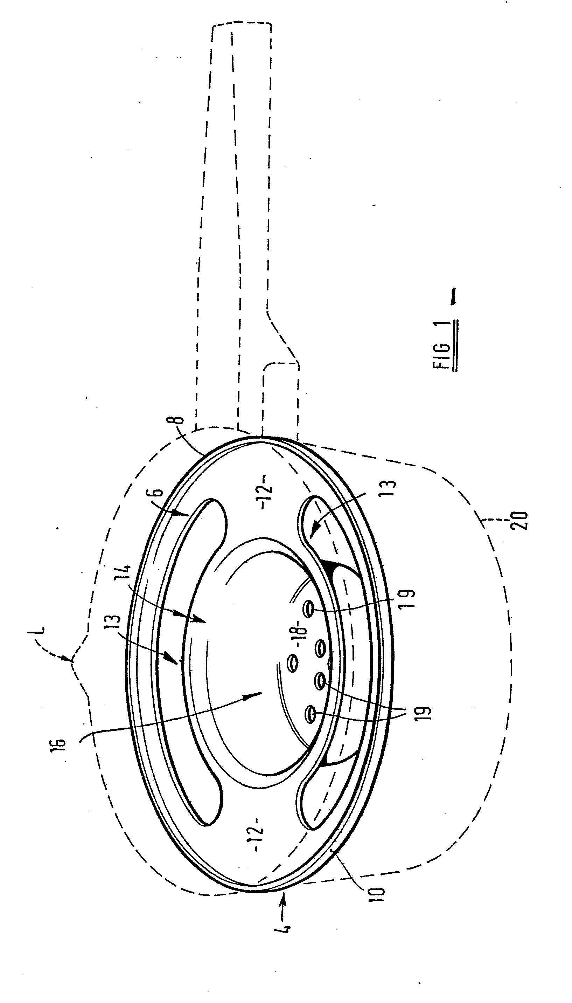

FIGURE 1 is a perspective view showing the combination of saucepan and insert which is the preferred embodiment of the invention, the saucepan being shown in dotted lines for clarity;

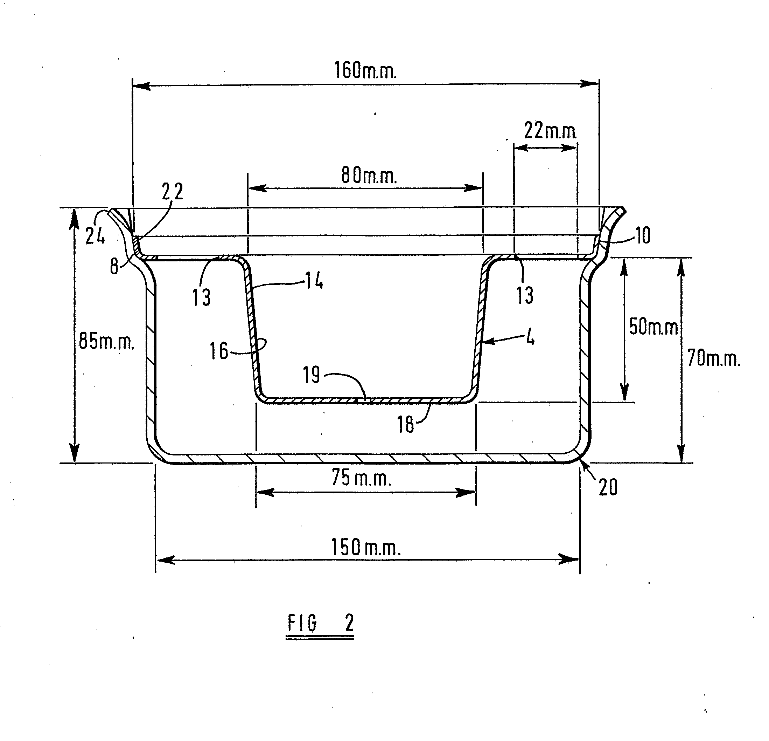

FIGURE 2 is a vertical sectional view of the combination; and

FIGURE 3 is a plan view of the insert.

The combination which is the preferred embodiment of this invention comprises a saucepan 20 and an accessory or insert 4 therefor, said insert comprising an outer circumferential portion 6, having an upwardly-turned lip 8, which is frusto-conical in shape, affording a tapered outer surface 10.

Connected to the outer portion 6 by two diametrically opposed webs 12 is an inner portion 14 which is generally of hollow cylindrical shape, affording a central well 16, the base 18 of which being provided with a number of apertures 19.

The diameter of the saucepan, at an internal circumferential region 22 thereof just below the rim 24, is equal to the outer diameter of the lip 8, permitting the insert to be placed in the saucepan in a position in which said outer surface 10 enters into tight-fitting abutment with said circumferential region 22, frictional engagement therebetween resisting outward movement of the insert relative to the saucepan. In this position, the base 18 of the central portion 14 is desirably spaced a short distance from the base of the saucepan.

When the saucepan is used in the heating of a liquid which is prone to overspill, arcuate or circumferential openings 13 provided in the outer portion 16 are positioned opposite the pouring lip or lips (such as that indicated at L in the drawing) of the saucepan. As the liquid in the saucepan reaches boiling point, it will rise within the saucepan, and pass through the openings 13 and flow into the central well 16. The liquid will cool and flow downwardly through the apertures 19 in the base 18 into the lower part of the saucepan, to be reheated and recirculated. In this manner, the liquid will be prevented from boiling over, unless excessive heat is applied to the saucepan. The saucepan can be lifted from the source of heat, and tipped up to allow the liquid to be poured therefrom, whilst the insert 6 is retained in position by virtue of the frictional engagement between the outer surface 10 and the internal surface of the saucepan.

Additional to its advantages in the heating of a liquid which is prone to overspill over, the insert may be used for the heating of small items, such as bottles or jars of baby food. The saucepan will be filled up to a desired level and the item placed within the well 16. Heated water will then rise through the apertures 19 in the base, to heat the item or (if the level of water in the saucepan is sufficiently high) will flow down into the well, around the item, and downwardly through the apertures 19.

The insert of the preferred embodiment of this invention is particularly suitable for use with a saucepan, the upper portion of which is tapered, as is shown in the accompanying drawing. Most conveniently, the accessory is of spun aluminium, with the outer portion 6 of such a thickness as to enable some resilient deformation thereof, as takes place when the accessory is press-fitted into the saucepan as hereinabove described.

In the combination which is the preferred embodiment of this invention, the saucepan 20, at the portion thereof below the internal circumferential region 22, is generally cylindrical, being approximately 150mm in diameter, and 70mm in depth. For the insert 4, the diameter of the well 14 is 75mm and the depth thereof is 50mm. Thus the ratio of the volume enclosed by the well to the volume of the saucepan beneath the level of the portion thereof engaged by the circumferential portion of the insert (which volume includes the volume of the well) is approximately 18%. Whilst this ratio is preferably maintained for different sizes of saucepan and insert combinations, the ratio may be reduced to 10% without significant disadvantage, but is preferably greater than 15%.

Additionally, the ratio of the area of the base 18 of the well to the cross-sectional area of the saucepan is approximately 25%. Whilst this ratio is preferably maintained for different sizes of saucepan and insert combinations, the ratio may be reduced to 10% without significant disadvantage (particularly if the well is somewhat frusto-conical in form, having a cross-section smaller at the base than at the top) but is preferably greater than 15%.

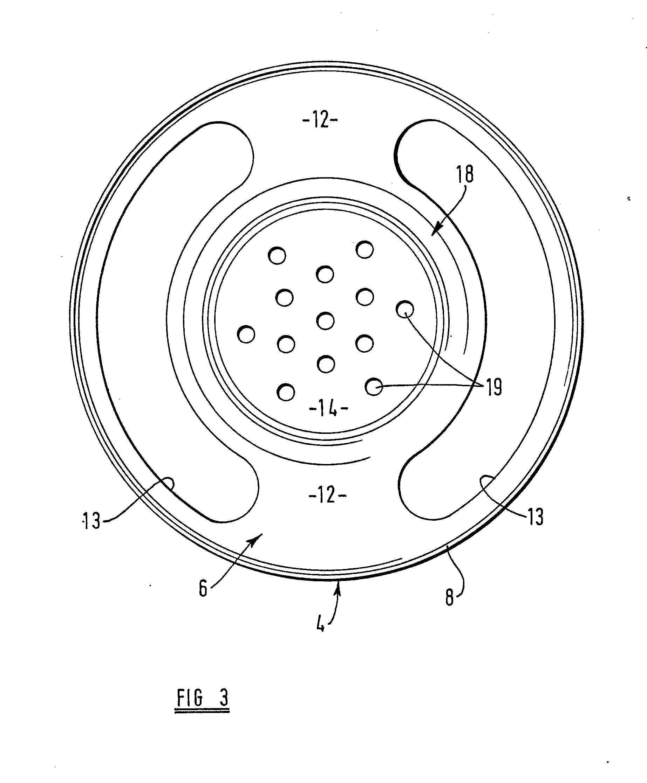

The circumferantially outer portion 12 is generally in the form of a flat annulus, and the ratio of the area of the openings 13 through which liquid in the saucepan may flow to the area of the circumferentially outer portion as a whole is approximately 36% (see Figure 3).

Whilst this ratio is preferably maintained for different sizes of saucepan and insert combinations, the ratio may be reduced to 20% without significant disadvantage, but is preferably greater than 25%, and preferably greater than 30%.

CLAIMS:

1.    In combination, a saucepan (20) and an insert (4) therefore which is adapted to be fitted into the interior of the saucepan, the insert comprising an outer circumferential portion (6) adapted to be grippingly engaged with an internal circumferential region (22) of the saucepan beneath the rim (24) thereof, and an inner portion which affords a central well (16) extending downwardly from the outer portion, said outer portion having one or more openings (13) arranged so that in use, boiling liquid in the saucepan may flow upwardly through the openings (13) and downwardly into the well (16) and through one or more apertures (19) in the well into the lower part of the saucepan, and so that liquid may be poured from the saucepan through the openings.

2.    The combination according to Claim 1 wherein the ratio of the volume enclosed by the well (16) to the volume of the saucepan (20) beneath the level of the circumferential region (22) thereof engaged by the insert is greater than 10%.

3.    The combination according to Claim 2 wherein said ratio is greater than 15%.

4.    The combination according to any one of the preceding claims wherein the well (16) comprises a generally flat base (18), and the ratio of the area of the base (18) to the cross-sectional area of the saucepan (20) is greater than 10%.

5.    The combination according to Claim 4 wherein said ratio is greater than 15%.

6.    The combination according to any one of the preceding claims wherein the outer portion (6) of the insert (4) is generally in the form of a flat annulus, and the ratio of the area of the openings through which liquid in the saucepan may flow to the area of the outer portion as a whole is greater than 20%.

7.    The combination according to Claim 6 wherein said ratio is greater than 25%.

8.    The combination according to any one of the preceding claims wherein the outer portion of the insert comprises two or more generally arcuate openings, webs between which interconnecting the outer portion and the inner portion.

9.    The combination according to any one of the preceding claims wherein the insert comprises a tapered lip which may be press-fitted into the saucepan by engagement with said internal circumferential region of the saucepan.

10.    The method of boiling a liquid, involving the use of the combination according to any one of the preceding claims, to prevent the liquid from boiling over.

0040966

FIG 1

FIG 2

FIG 3

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | A 47 J 27/60 |
| | FR - A - 704 267 (GILLET)<br><br>* the whole document * | 1,2,3,<br>6,7,8,<br>10 | |
| | -- | | |
| | FR - A - 918 351 (ROUSSELLE)<br><br>* the whole document * | 1-6,<br>10 | |
| | -- | | |
| | FR - A - 964 926 (MARCE)<br><br>* the whole document * | 1-3,<br>6,10 | **TECHNICAL FIELDS SEARCHED (Int. Cl.3)** |
| | ----- | | A 47 J |

The present search report has been drawn up for all claims

| Place of search | Date of completion of the search | Examiner |
|---|---|---|
| The Hague | 31-08-1981 | SCHARTZ |

EPO Form 1503.1   06.78